Europäisches Patentamt

European Patent Office

Office européen des brevets

(19)

(11) Publication number: **0 085 921**

A2

(12) **EUROPEAN PATENT APPLICATION**

(21) Application number: 83100859.4

(22) Date of filing: 29.01.83

(51) Int. Cl.³: **G 01 G 3/14**
**G 01 G 3/12**

(30) Priority: 04.02.82 IT 1946082

(43) Date of publication of application:
17.08.83 Bulletin 83/33

(84) Designated Contracting States:
CH DE FR GB LI

(71) Applicant: DATAPROCESS S.p.A
Via Gallarate, 112
I-20100 Milan(IT)

(72) Inventor: Lupoli, Francesco
Via Mangiagalli, 7
I-20100 Milan(IT)

(74) Representative: Dr. Ing. A. Racheli & C.
Viale San Michele del Carso, 4
I-20144 Milano(IT)

(54) A process and relative weighing instrument in which at least one strain gage is used.

(57) This invention provides that a weight as sensed by one or more strain gages applied to an elastic element (10) subjected to the action of said weight is made independent of some parameters, such as hysteresis and permanent deformation or "creep", by subjecting said element to at least one magnetic pulse. Therefore, the relative weighing instrument also comprises a coil (11) located adjacent the elastic element (10), said coil (11) supplying at least once during the weighing cycle a current pulse generating a change of magnetic field in said element.

EP 0 085 921 A2

Croydon Printing Company Ltd

Applicant:

DATAPROCESS S.p.A.

Via Gallarate, 112

20100 MILAN (Italy)

"A PROCESS AND RELATIVE WEIGHING INSTRUMENT IN WHICH AT LEAST ONE STRAIN GAGE IS USED".

This invention relates to instruments using at least one strain gage for weight sensing.

Instruments of the above type comprise at least one elastic element having at least one strain gage applied thereon; in such devices, the weight may be applied either directly to the elastic element or to a lever system transmitting the demultiplied weight to the element.

It is well known that strain gages suffer from the disadvantage of requiring a great deal of calibrations. Particularly, some of these calibrations or adjustments are due to the work produced by the elastic element, or hysteresis or permanent deformation or "creep" thereof.

It is the object of the present invention to provide a weighing process and corresponding instrument, according to which each weighing can be independent of some phenomena, such as those due to hysteresis and "creep" arising in said element.

The above mentioned object has been achieved by providing to supply a magnetic pulse to the elastic element, the latter having at least one strain gage applied thereto.

Preferably, at least one pulse is supplied during each weighing cycle, for example at the end or at the beginning of each weighing.

A preferred embodiment of the invention provides that the magnetic field is directed parallel to the axis of the elastic element.

The weighing instrument solving the proposed problem is provided with an electromagnetic means located adjacent the elastic element having at least one strain gage applied thereto. Preferably, it is provided that said electromagnetic means is a coil and the latter is arranged so that the axis thereof is coincident with the axis of the elastic element.

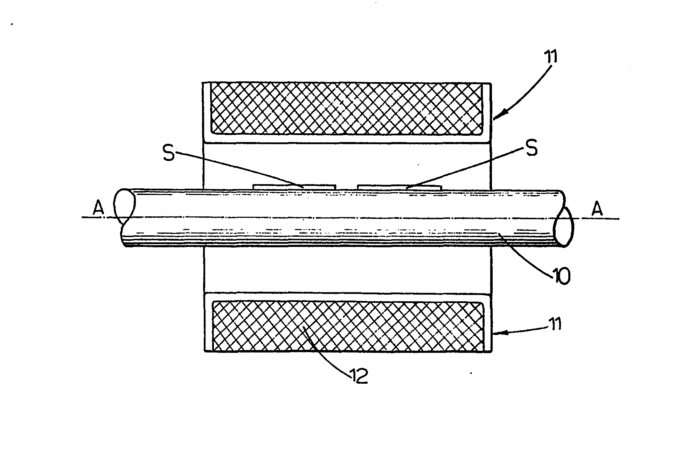

The invention will now be further explained with reference to an exemplary embodiment, which has been illustrated in the single figure of the accompanying drawing, showing a portion of weighing instrument comprising an elastic element carrying strain gages and an electromagnetic means for carrying out the process according to the present invention.

Referring to the drawing, it will be seen that the elastic element has been designated at 10. As well known, such an element will be loaded by levers or directly with a weight to be sensed. This has not been shown on the drawing as well known in the art. Said elastic element 10 has applied thereon strain gages, denoted by S, by means of any known system; that is, such strain gages can be glued or even implemented on the surface of the spring element.

A preferred embodiment of the invention provides that a coil 11 having a winding 12 is arranged concentrically of element 10. Thus, said coil 11 will have an axis coincident with the axis A of the elastic element. Whenever subjected to a weight, said element 10 will be deformed. The strain gages S will sense this deformation providing an indication relating to the applied weight. When the weight is removed, the spring element 10 should return to its original conditions, but this unfortunately does not perfectly occur.

According to the present invention, the elastic element can be brought back to provide a perfect response by supplying magnetic pulses thereto. Preferably, these pulses will have a duration of some milliseconds. Preferably, the pulse will be supplied at least once during the weighing cycle, particularly such a pulse is preferably supplied at the end or at the beginning of each weighing.

0085921

DATAPROCESS S.p.A.

20100 MILAN (Italy)

C L A I M S

1.      A process according to which each weighing is carried out by sensing through a strain gage (S) and relative electronic apparatus, the local elongation of aa elastic element (10) directly or indirectly stressed by a weight, this elongation being related to a weight value, characterized in that said elastic element (10), having at least one strain gage (S) applied thereto, is supplied with at least one magnetic pulse causing a temporary change in the magnetic field about the elastic element (10).

2.      A process according to Claim 1, characterized in that the varying magnetic field is arranged in the direction of the axis (A) of said elastic element (10).

3.      A process according to Claim 1 or Claim 2, characterized in that said magnetic pulse has a duration of some milliseconds.

4.      A process according to Claim 1, 2 or 3, characterized in that said magnetic pulse is supplied immediately before the weighing beginning.

5.      A process according to Claims 1, 2 or 3, characterized in that said magnetic pulse is supplied at the end of each weighing cycle.

6.      A weighing instrument for carrying out the process according to any Claims 1 to 5, and comprising an elastic element (10) having at least one strain gage (S) applied thereto, said elastic element (10) being stressed both directly and indirectly by a weight which is sensed by the strain gage (S) through the relative electronic apparatus, characterized by providing adjacent said elastic element (10) with an electromagnetic means (11) for generating a varying magnetic field.

7.      An instrument according to Claim 6, characterized in that said electromagnetic means comprises a coil (11).

8.      A weighing instrument according to Claim 7, characterized in that said coil (11) is arranged coaxially with said elastic element (10).